# EUROPEAN PATENT APPLICATION

(11) **EP 4 694 259 A1**
(43) Date of publication of application: **11.02.2026**
(21) Application number: 23931427.1
(22) Date of filing: 06.04.2023
(51) Int. Cl.: H04W 12/06

(54) **AUTHENTICATION METHOD AND APPARATUS, NETWORK DEVICE AND COMPUTER STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, Wei, Beijing 100085 (CN)
(74) Representative: Dehns Germany Partnerschaft mbB
(86) International application number: PCT/CN2023/086706
(87) International publication number: WO 2024/207359

(57) **Abstract**

Provided in the present disclosure are an authentication method and apparatus, a network device, and a computer storage medium. The method may comprise: receiving a first message, the first message being used for triggering an authentication process for a first terminal, and the first terminal being a terminal that separately accesses a first service network and a second service network via different access types; and determining a second network element or a third network element as a fourth network element used for triggering the authentication process, the second network element being a network element of the first service network, and the third network element being a network element of the second service network. The present disclosure can realize network authentication for the terminal in the case of multiple registrations of the terminal in different service networks.

## Description

### TECHNICAL FIELD

The present disclosure relates to the technical field of wireless communication, and in particular, to an authentication method and apparatus, a network device, and a computer storage medium.

### BACKGROUND

With the development of technology, in a wireless communication system, one terminal can access multiple serving networks through different access types, i.e., access the serving networks of different public land mobile networks (PLMNs). A terminal may access one serving network via a 3GPP access type and complete the registration process in the home network, and access another serving network via a non-3GPP access type and complete the registration process in the home network. Such a scenario can be referred to as "multiple registrations of a terminal in different serving networks" (i.e., multiple registrations in different PLMNs).

Currently, when a terminal performs multiple registrations in different serving networks, how to implement the authentication procedure of the home network for the terminal is an urgent problem to be solved.

### SUMMARY

The present disclosure provides an authentication method and apparatus, a device, and a storage medium to implement network authentication for a terminal when the terminal performs multiple registrations in different serving networks.

In a first aspect, the present disclosure provides an authentication method. The authentication method is applied to a first network function. The authentication method includes: receiving a first message, where the first message is used to trigger an authentication procedure for a first terminal, where the first terminal is a terminal that accesses a first serving network and a second serving network respectively through different access types; and determining a second network function or a third network function as a fourth network function for triggering the authentication procedure, where the second network function is a network function of the first serving network, and the third network function is a network function of the second serving network.

In some possible implementation manners, the process of determining the second network function or the third network function as the fourth network function for triggering the authentication procedure may include: determining the second network function or the third network function as the fourth network function based on first data and/or a default configuration and/or an operator policy, where the first data includes registration information and/or connection status information of the first terminal in the first serving network, and registration information and/or connection status information of the first terminal in the second serving network.

In some possible implementation manners, the registration information may include registration time information and reachability information.

In some possible implementation manners, the operation of determining the second network function or the third network function as the fourth network function based on the first data and/or the default configuration and/or the operator policy may include: in a case that the reachability information indicates that the first terminal is reachable in the first serving network and is unreachable in the second serving network, determining the second network function as the fourth network function.

In some possible implementation manners, the operation of determining the second network function or the third network function as the fourth network function based on the first data and/or the default configuration and/or the operator policy may include: in a case that the connection status information indicates that the first terminal is in a connected state in the first serving network and in an idle state in the second serving network, determining the second network function as the fourth network function.

In some possible implementation manners, the operation of determining the second network function or the third network function as the fourth network function based on the first data and/or the default configuration and/or the operator policy may include: in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determining a network function of a serving network with a latest registration time of the first terminal, between the second network function of the first serving network and the third network function of the second serving network, as the fourth network function.

In some possible implementation manners, the operation of determining the second network function or the third network function as the fourth network function based on the first data and/or the default configuration and/or the operator policy may include: in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determining the second network function as the fourth network function. The first terminal may access the first serving network via a 3GPP access type and access the second serving network via a non-3GPP access type.

In some possible implementation manners, the operation of determining the second network function or the third network function as the fourth network function based on the first data and/or the default configuration and/or the operator policy may include: determining the second network function as the fourth network function by default. The first terminal may access the first serving network via a 3GPP access type and access the second serving network via a non-3GPP access type.

In some possible implementation manners, the operation of determining the second network function or the third network function as the fourth network function based on the first data and/or the default configuration and/or the operator policy may include: determining the second network function as the fourth network function according to the operator policy. The first terminal may access the first serving network via a 3GPP access type and access the second serving network via a non-3GPP access type.

In some possible implementation manners, before determining the second network function or the third network function as the fourth network function for triggering the authentication procedure, the above-mentioned authentication method may further include: receiving a second message from the second network function and/or the third network function, where the second message includes at least one of: the registration information and/or the connection status information of the first terminal in the first serving network, and the registration information and/or the connection status information of the first terminal in the second serving network; and saving the received registration information and/or connection status information.

In some possible implementation manners, after determining the second network function or the third network function as the fourth network function for triggering the authentication procedure, the method may further include: sending a third message to the fourth network function, where the third message is used to instruct the fourth network function to trigger the authentication procedure for the first terminal.

In some possible implementation manners, the method may further include: receiving a fourth message from the fourth network function, where the fourth message is a response message or a confirmation message sent by the fourth network in response to the third message.

In a second aspect, the present disclosure provides an authentication method. The authentication method is applied to a fourth network function. The method includes: receiving a third message from a first network function, where the third message is used to instruct the fourth network function to trigger an authentication procedure for a first terminal, where the first terminal is a terminal that accesses a first serving network and a second serving network respectively through different access types. The fourth network function is determined by the first network function from a second network function and a third network function. The second network function is a network function of the first serving network. The third network function is a network function of the second serving network.

In some possible implementation manners, the method may further include: sending a fourth message to the first network function. The fourth message is a response message or a confirmation message sent by the fourth network function in response to the third message.

In some possible implementation manners, after receiving the third message from the first network function, the method may further include: triggering the authentication procedure for the first terminal.

In a third aspect, the present disclosure provides an authentication apparatus. The authentication apparatus is provided in a first network function. The authentication apparatus includes a receiving module and a processing module. The receiving module is configured to receive a first message. The first message is used to trigger an authentication procedure for a first terminal. The first terminal is a terminal that accesses a first serving network and a second serving network through different access types. The processing module is configured to determine a second network function or a third network function as a fourth network function for triggering the authentication procedure, where the second network function is a network function of the first serving network, and the third network function is a network function of the second serving network.

In some possible implementation manners, the processing module may be configured to: determine the second network function or the third network function as the fourth network function based on first data and/or a default configuration and/or an operator policy. The first data includes registration information and/or connection status information of the first terminal in the first serving network, and registration information and/or connection status information of the first terminal in the second serving network.

In some possible implementation manners, the registration information may include registration time information and reachability information.

In some possible implementation manners, the processing module may be configured to: in a case that the reachability information indicates that the first terminal is reachable in the first serving network and is unreachable in the second serving network, determine the second network function as the fourth network function.

In some possible implementation manners, the processing module may be configured to: in a case that the connection status information indicates that the first terminal is in a connected state in the first serving network and in an idle state in the second serving network, determine the second network function as the fourth network function.

In some possible implementation manners, the processing module may be configured to: in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determine a network function of a serving network with a latest registration time of the first terminal, between the second network function of the first serving network and the third network function of the second serving network, as the fourth network function.

In some possible implementation manners, the processing module may be configured to: in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determine the second network function as the fourth network function. The first terminal may access the first serving network via a 3GPP access type and access the second serving network via a non-3GPP access type.

In some possible implementation manners, the processing module may be configured to: determine the second network function as the fourth network function by default. The first terminal may access the first serving network via a 3GPP access type and access the second serving network via a non-3GPP access type.

In some possible implementation manners, the processing module may be configured to: determine the second network function as the fourth network function according to the operator policy. The first terminal may access the first serving network via a 3GPP access type and access the second serving network via a non-3GPP access type.

In some possible implementation manners, the receiving module may be further configured to receive a second message from the second network function and/or the third network function. The second message may include at least one of: the registration information and/or the connection status information of the first terminal in the first serving network, and the registration information and/or the connection status information of the first terminal in the second serving network. The processing module may be further configured to store the received registration information and/or connection status information.

In some possible implementation manners, the authentication apparatus may further include a sending module. The sending module is configured to: send a third message to the fourth network function. The third message is used to instruct the fourth network function to trigger the authentication procedure for the first terminal.

In some possible implementation manners, the receiving module may be further configured to: receive a fourth message from the fourth network function. The fourth message is a response message or a confirmation message sent by the fourth network in response to the third message.

In a fourth aspect, the present disclosure provides an authentication apparatus. The authentication apparatus is provided in a fourth network function. The authentication apparatus includes a receiving module. The receiving module is configured to receive a third message from a first network function. The third message is used to instruct the fourth network function to trigger an authentication procedure for a first terminal. The first terminal is a terminal that accesses a first serving network and a second serving network through different access types. The fourth network function is determined by the first network function from the second network function and the third network function. The second network function is a network function of the first serving network. The third network function is a network function of the second serving network.

In some possible implementation manners, the authentication apparatus may further include a sending module. The sending module is configured to send a fourth message to the first network function. The fourth message is a response message or a confirmation message sent by the fourth network in response to the third message.

In some possible implementation manners, the authentication apparatus may further include a processing module. The processing module is configured to trigger the authentication procedure for the first terminal.

In a fifth aspect, the present disclosure provides a network device. The network device includes a memory and a processor. The memory is configured to store computer-executable instructions. The processor is connected to the memory and configured to execute the computer-executable instructions in the memory to implement the authentication method as described in any one of the first and second aspects and possible implementation manners thereof.

In a sixth aspect, the present disclosure provides a computer storage medium having computer executable instructions stored thereon. The computer executable instructions, when executed by a processor, are capable of implementing the authentication method as described in any one of the first and second aspects and possible implementation manners thereof.

In a seventh aspect, the present disclosure provides a computer program. The computer program includes executable instructions. The executable instructions, when executed by a processor, are capable of implementing the authentication method as described in any one of the first and second aspects and possible implementation manners thereof.

In the present disclosure, for a scenario where a terminal accesses multiple serving networks via different access types, a first network function can determine the second network function of the first serving network or the third network function of the second serving network as the fourth network function for triggering the authentication procedure for the terminal. In this way, an access type can be selected and the corresponding fourth network function for triggering the authentication procedure can be determined; subsequently, the network path for the authentication procedure can be determined, thereby enabling the network-triggered authentication procedure for the terminal. As such, there is no need to suspend services such as steering of roaming and user parameter update, which enhances network security and ensures quality of service.

It should be understood that the technical solutions of the third to seventh aspects of the present disclosure are consistent with those of the first and second aspects of the present disclosure, and the beneficial effects achieved by each aspect and the corresponding feasible implementation manners are similar, which will not be repeated here.

### BRIEF DESCRIPTION OF THE DRAWINGS

FIG. 1 is a schematic diagram of a network architecture for implementing an authentication procedure according to an embodiment of the present disclosure.
FIG. 2 is a schematic flow chart of an embodiment of an authentication method according to an embodiment of the present disclosure.
FIG. 3 is a schematic flow chart of another embodiment of an authentication method according to an embodiment of the present disclosure.
FIG. 4 is a schematic flow chart of an embodiment of another authentication method according to an embodiment of the present disclosure.
FIG. 5 is a schematic interaction diagram of an exemplary embodiment of an authentication method according to an embodiment of the present disclosure.
FIG. 6 is a schematic structural diagram of an authentication apparatus according to an embodiment of the present disclosure.
FIG. 7 is a schematic structural diagram of a communication device according to an embodiment of the present disclosure.
FIG. 8 is a schematic structural diagram of a terminal device according to an embodiment of the present disclosure.
FIG. 9 is a schematic structural diagram of a network device according to an embodiment of the present disclosure.

### DETAILED DESCRIPTION

Exemplary embodiments are be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an" and "the" used in the embodiments of the present disclosure are also intended to include plural forms unless the context clearly indicates other meanings.

It should be understood that although the terms "first", "second", "third", etc. may be used to describe various information in the embodiments of the present disclosure, such information should not be limited to these terms. These terms are only used to distinguish the same type of information from each other. For example, without departing from the scope of the embodiments of the present disclosure, the "first information" may also be referred to as the "second information", and similarly, the "second information" may also be referred to as the "first information". Depending on the context, the word "if" as used herein may be interpreted as "when..." or "while..." or "in response to determination".

Furthermore, in the description of the embodiments of the present disclosure, "and/or" is merely a description of an association relationship between associated objects, indicating that three types of relationships may exist. For example, A and/or B may represent the following three cases: A exists alone, A and B exist simultaneously, and B exists alone. In addition, in the description of the embodiments of the present disclosure, "a plurality of" may refer to two or more than two.

In a wireless communication system, to protect the steering of roaming (SoR) service and/or user equipment (UE) parameter update (UPU) service, the authentication server function (AUSF) and the terminal need to maintain relevant counters (such as Counter_{SoR} or Counter_{UPU}) for the lifecycle of a key (e.g., K_{AUSF}). Once the counter is about to wrap around, the protection service for the UE's SoR or UPU will be suspended. Only after a new K_{AUSF} is generated for the UE can the counter in the AUSF be reset, thereby enabling the restoration of the protection service for the terminal's SoR or UPU. Therefore, the K_{AUSF} needs to be refreshed in a timely manner before it becomes invalid.

In an embodiment, the primary authentication procedure enables mutual authentication between a terminal and a network. After the primary authentication is successfully completed, a new K_{AUSF} can be generated; in this way, the refresh of the K_{AUSF} can be achieved. Currently, there is no mechanism in the home network to trigger the primary authentication procedure for the terminal to refresh the K_{AUSF}. From a security perspective, the network functions (NFs) in the core network need to have the capability to trigger the primary authentication procedure.

Here, the "primary authentication procedure" refers to the authentication procedure between a terminal and a network, and may also be referred to as "authentication procedure", "network authentication procedure", "re-authentication", etc.

In one embodiment, a terminal may access serving networks of different PLMNs through different access types respectively. For example, a terminal may access one serving network via a 3GPP access type and access another serving network via a non-3GPP access type. In this case, the unified data management (UDM) function in the home network is connected to the access and mobility management function (AMF) in the serving networks of different PLMNs respectively.

Then, when a terminal performs multiple registrations in different serving networks, how to implement the authentication procedure of the home network for the terminal is an urgent problem to be solved.

To solve the above problem, the embodiments of the present disclosure provide a wireless communication system to implement the authentication procedure for a terminal.

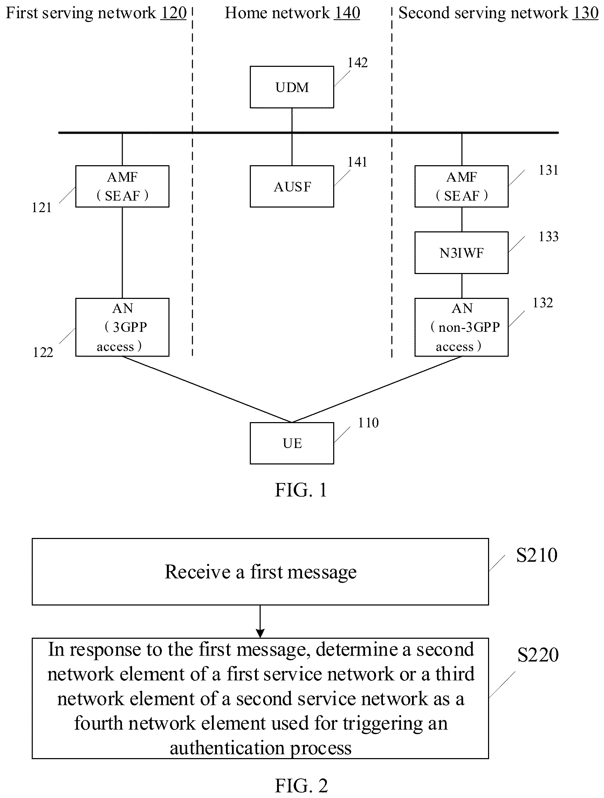

FIG. 1 is a schematic diagram of the system architecture of the wireless communication system according to an embodiment of the present disclosure. As shown in FIG. 1, a terminal 110 (which may also be referred to as a first terminal) accesses a first serving network 120 and a second serving network 130. In addition, the terminal 110 belongs to a home network (HN) 140, for example, a network of a home PLMN (HPLMN).

The first serving network 120 includes AMF 121. The second serving network 130 includes AMF 131. AMF 121 and AMF 131 have access and mobility management functions, mainly implementing functions such as mobility management, access authentication/authorization, and so on. In addition, AMF 121 and AMF 131 are also responsible for delivering user policies. It can be understood that the first serving network 120 and the second serving network 130 may also respectively include a security anchor function (SEAF). The SEAF has a security anchor function and mainly implements authentication functions. It can be understood that the SEAF in the first serving network 120 may be deployed in a centralized manner with AMF 121 or independently of AMF 121; similarly, the SEAF in the second serving network 130 may be deployed in a centralized manner with AMF 131 or independently of AMF 131, which is not specifically limited in the embodiments of the present disclosure.

In some cases, as shown in FIG. 1, the terminal 110 may access the first serving network 120 through one access type (e.g., a 3GPP access type), and the terminal 110 may also access the second serving network 130 through another access type (a non-3GPP access type). For example, the first serving network 120 is connected to the access network 122 corresponding to the 3GPP access type. The access network functions (which may also be referred to as access network network elements, access network devices, access network functional entities, etc.) in the access network 122 may be connected to network functions such as AMF 121. The second serving network 130 is connected to the access network 132 corresponding to the non-3GPP access type. The access network functions in the access network 132 may be connected to the non-3GPP interworking function (N3IWF) 133 in the core network, and indirectly connected to network functions such as AMF 121 by means of N3IWF 133.

In other cases, the terminal 110 may also access the first serving network 120 and the second serving network 130 through a 3GPP access type, or may access the first serving network 120 and the second serving network 130 through a non-3GPP access type, which is not specifically limited in the embodiments of the present disclosure.

In an embodiment, the home network 140 includes AUSF 141 and UDM 142. AUSF 141 has an authentication server function, which supports a unified authentication server function, and implements authentication for the terminal. UDM 142 has functions such as management of user identities, subscription data, and authentication data, as well as registration management of the user's serving network functions.

It should be noted that in the embodiment of the present disclosure, the AMF 121 in the first serving network 120, the AMF 131 in the second serving network 130, the AUSF 141 and UDM 142 in the home network support the authentication procedure triggered by the home network 140.

The aforementioned terminal 110 may be a terminal device with wireless communication capabilities, and may also be referred to as UE. Terminals may be deployed on land, including indoor or outdoor, handheld, wearable, or vehicle-mounted devices; they may also be deployed on water surfaces (such as ships, etc.); and may further be deployed in the air (e.g., on aircraft, balloons, satellites, etc.). The aforementioned terminal may be a mobile phones, a tablet computer (Pad), a computer with wireless transceiver functions, a virtual reality (VR) terminal device, an augmented reality (AR) terminal device, a wireless terminal used in industrial control, a wireless terminal used in self-driving, a wireless terminal used in remote medical, a wireless terminals used in smart grids, a wireless terminal used in transportation safety, a wireless terminal in smart cities, a wireless terminal in smart homes, and the like. A terminal may also be a handheld device, a vehicle-mounted device, a wearable device, a computing device equipped with wireless communication capabilities, or other processing devices connected to a wireless modem. Optionally, terminals may also be called different names in different networks, such as: terminal device, access terminal, subscriber unit, subscriber station, mobile station, mobile terminal, remote station, remote terminal, mobile device, user terminal, terminal, wireless communication device, user agent or user equipment, cellular phone, cordless phone, session initiation protocol (SIP) phone, wireless local loop (WLL) station, personal digital assistant (PDA), terminal in a 5G network or a future evolved network, etc.

The aforementioned access network function may refer to a network function, a network device, a network function entity, etc., on the access network side that are used to support the terminal 110 in accessing the wireless communication system. For example, the access network function may be a next generation NodeB (gNB), a transmission reception point (TRP), a relay node, an access point (AP), etc., in a 5G access technology communication system.

It should be noted that in the system architecture shown in FIG. 1, the various network functions (or network devices, network functions, network function entities, etc.) and the connection relationship are merely exemplary. When various network functions are applied in the embodiments of the present disclosure, not all network functions are necessary. All or part of the network functions of the core network may be physical devices or virtualized devices, which is not limited herein. Of course, the system architecture in the embodiments of the present disclosure may also include other network functions not shown in FIG. 1, which is not limited herein.

In order to solve the above-mentioned problem, the embodiments of the present disclosure provide an authentication method to implement the authentication procedure for a terminal when the terminal performs multiple registrations in different serving networks.

The "authentication procedure" described in the embodiments of the present disclosure may be a primary authentication procedure, such as the authentication procedure of extensible authentication protocol and authentication and key agreement (EAP-AKA'), or the 5G AKA authentication procedure. For details, reference may be made to the primary authentication procedures defined in Sections 6.1.2 and 6.1.3 of 3GPP TS 33.501.

FIG. 2 is a schematic flow chart of an embodiment of an authentication method according to an embodiment of the present disclosure. Here, the first network function may also be referred to as a first network function, a first network function entity, a first core network function, a first core network function entity, a first network device, a first core network device, etc. The specific name and description of the first network function are not specifically limited in the embodiments of the present disclosure.

As shown in FIG. 2, the above authentication method may include step S210 and step S220.

In step S210, a first message is received.

Here, the first message is used to trigger an authentication procedure for a first terminal, where the first terminal is a terminal that accesses a first serving network and a second serving network respectively through different access types.

In an embodiment, the first message may directly or indirectly trigger the authentication procedure for the first terminal.

In an embodiment, the first message may explicitly indicate triggering the authentication procedure for the first terminal. In this case, the first message may be a request message or a notification message, and the request message or notification message may be dedicated to requesting or notifying the triggering of the authentication procedure for the first terminal. In an example, the first message may be a Nudm_reauthentication request message. In an example, the first message may be a re-authentication message from the authentication and key management for application (AKMA) anchor function (AANF).

In an embodiment, the first message may implicitly indicate triggering the authentication procedure for the first terminal. In this case, the first message may be a message used to trigger other functions, and the message may carry an indication information, which may indicate triggering the authentication procedure for the first terminal. In an example, the aforementioned indication information may be the value of a counter related to the K_{AUSF} of the first terminal. In an example, the first message may be a Nausf_SoRProtection response message. In this case, the first message may come from the AUSF. The counter related to the key K_{AUSF} may be, for example, a counter for the SoR service (Counter_{SoR}). In an example, the first message may be a Nausf_UPUProtection response message. In this case, the first message may come from the AUSF. The counter related to the key K_{AUSF} may be a counter for the UPU service (Counter_{UPU}). In addition, the indication information may be a counter_wrap for indicating Counter_{SoR} or Counter_{UPU}, or other identifiers used to indicate re-authentication.

Of course, there may be other implementations of the first message, which are not specifically limited in the embodiments of the present disclosure.

In an embodiment, the first network function may be a network function in the home network, and the first network function is connected to the first serving network and the second serving network. For example, the first network function may be the UDM in the HPLMN. It can be understood that the first network function may also be other network functions in the HPLMN, which is not specifically limited in the embodiments of the present disclosure.

In step S220, in response to the first message, a second network function of the first serving network or a third network function of the second serving network is determined as a fourth network function for triggering the authentication procedure.

It is understandable that the second network function may be located in the first serving network, and the third network function may be located in the second serving network. Both the second network function and the third network function may trigger the authentication procedure according to the instruction of the first network function. In this step, the first network function selects one network function from the second network function and the third network function as the fourth network function for triggering the authentication procedure.

For example, the second network function may be the AMF of the first serving network, and the third network function may be the AMF of the second serving network. It can be understood that the second network function and the third network function may also be other network functions in the first serving network and the second serving network, which is not specifically limited in the embodiments of the present disclosure.

In an embodiment, after receiving the first message in step S210, the first network function, in step S220, determines one from the second network function of the first serving network and the third network function of the second serving network in response to the first message to trigger the authentication of the first terminal.

In an embodiment, in step S220, the first network function may, in response to the first message, determine the second network function or the third network function as the fourth network function based on first data, a default configuration and/or an operator policy.

In an embodiment, the first data is data related to the first terminal stored on the first network function. In an embodiment, the first data may include at least one of the following: registration information and/or connection status information of the first terminal in the first serving network, and registration information and/or connection status information of the first terminal in the second serving network.

In an embodiment, the registration information (which may also be referred to as registration data) may be stored on the first network function during the registration process (or access process) of the first terminal in the first serving network and/or the second serving network. In an embodiment, for a registration process based on the 3GPP access type (i.e., Amf3GppAccessRegistration), the registration information may be Amf3GppAccessRegistration data. In an embodiment, for a registration process based on the non-3GPP access type (i.e., AmfNon3GppAccessRegistration), the registration information may be AmfNon3GppAccessRegistration data.

In an embodiment, for either the first serving network or the second serving network, the registration information may include at least registration time information and reachability information. In an example, the registration time information may correspond to the "registrationTime" attribute and be used to indicate the registration time of the first terminal. The reachability information may correspond to the "ueReachableId" attribute and be used to indicate the reachability of the first terminal. Here, the reachability of the first terminal may include but is not limited to the following types: reachable, unreachable (for example, the first terminal is located in a prohibited area), and unknown (for example, the AMF does not receive the service restriction area of the first terminal during the initial registration process). Here, "unreachable" and "unknown" may be collectively understood as meaning that the first terminal is not reachable.

In an embodiment, the registration information may be obtained by the first network function from the second network function of the first serving network and/or the third network function of the second serving network during the registration process of the first terminal. Of course, the registration information may also be obtained by the first network function from other network functions in the first serving network and/or the second serving network during the registration process of the first terminal, or may be obtained by the first network function from the second network function of the first serving network and/or the third network function of the second serving network during other processes of the first terminal, which is not limited by the embodiments of the present disclosure.

In an embodiment, the connection status information may be used to indicate the connection status (also referred to as connection management status) of the first terminal in the first serving network and/or the second serving network. The connection status of the first terminal may include, but is not limited to: idle state (IDLE or CM-IDLE) and connected state (CONNECTED or CM-CONNECTED). In an embodiment, the connection status information may be obtained by the first network function from the second network function of the first serving network and/or the third network function of the second serving network.

In an embodiment, the above method may include: receiving a second message from the second network function and/or the third network function, where the second message includes at least one of: the registration information and/or the connection status information of the first terminal in the first serving network, and the registration information and/or the connection status information of the first terminal in the second serving network; and storing the received registration information and/or connection status information.

In some cases, the second message may be actively sent by the second network function and/or the third network function to the first network function, or may be sent by the second network function and/or the third network function to the first network function in response to a request message from the first network function. In an example, the second network function and/or the third network function may periodically send the second message to the first network function. In an example, the second network function and/or the third network function may send the second message to the first network function when the connection status information and/or registration information of the first terminal changes. For example, the first network function may subscribe to the connection status information and/or registration information of the first terminal from the second network function and/or the third network function. For example, the first network function may use the Namf_EventExposure procedure to subscribe to the connection status information and/or registration information. In this case, the second message may be a NamC_EventExposure_Notify message. In an example, the first network function may periodically or aperiodically send a query/request message to the second network function and/or the third network function, and the second network function and/or the third network function sends the second message to the first network function in response to the query/request message. Of course, the connection status information and/or registration information may also be obtained by the first network function from other network functions in the first serving network and the second serving network, which is not specifically limited in the embodiments of the present disclosure. In addition, the connection status information may be carried in the second message using attribute information such as CMInfoReport, CMInfo, and CMState.

In an embodiment, the default configuration may be a pre-configured policy. In an example, the default configuration may refer to determining, by default, the network function in the serving network to which the first terminal accesses via the 3GPP access mode as the fourth network function.

In an embodiment, the operator policy may be a policy formulated by an operator. In an embodiment, the first serving network and the second serving network may belong to the same operator, and the same operator policy may be adopted to determine the fourth network function. In an embodiment, the first serving network and the second serving network may belong to different operators, and different operator policies may be adopted to determine the fourth network function. For example, the operator policy may be to determine the network function in the serving network to which the first terminal accesses via the 3GPP access type, such as the AMF 121 in FIG. 1, as the fourth network function.

In an embodiment, in step S220, if the reachability information indicates that the first terminal is reachable in the first serving network and not reachable in the second serving network, the second network function is determined as the fourth network function. It can be understood that if the first terminal is reachable in the first serving network and not reachable in the second serving network, the first network function may select the second network function in the first serving network as the fourth network function. Alternatively, if the first terminal is reachable in the second serving network and not reachable in the first serving network, the third network function in the second serving network may be selected as the fourth network function.

In an embodiment, in step S220, in the case that the connection status information indicates that the first terminal is in a connected state in the first serving network and in an idle state in the second serving network, the second network function is determined as the fourth network function. It is understood that if the first terminal is in a connected state in the first serving network and in an idle state in the second serving network, the first network function may select the second network function in the first serving network as the fourth network function. Alternatively, if the first terminal is in a connected state in the second serving network and in an idle state in the first serving network, the third network function in the second serving network may be selected as the fourth network function.

In the above embodiments, the first serving network may be a network accessed and registered by the first terminal through the 3GPP access type, in which case the second serving network may be a network accessed and registered by the first terminal through the non-3GPP access type. Alternatively, the first serving network may also be a network accessed and registered by the first terminal through the non-3GPP access type, in which case the second serving network may also be a network accessed and registered by the first terminal through the 3GPP access type.

For example, as shown in FIG. 1, assuming that the first serving network is a network accessed by the first terminal through the 3GPP access type, and the second serving network is a network accessed by the first terminal through the non-3GPP access type. In this case, in step S220, if the connection status information indicates that the first terminal is in a connected state in the first serving network and in an idle state in the second serving network, the first network function determines the second network function (e.g., AMF 121) as the fourth network function. Alternatively, if the connection status information indicates that the first terminal is in an idle state in the first serving network and in a connected state in the second serving network, the first network function determines the third network function (e.g., AMF 131) as the fourth network function. Alternatively, if the reachability information indicates that the first terminal is reachable in the first serving network but unreachable in the second serving network, the first network function determines the second network function (e.g., AMF 121) as the fourth network function. Alternatively, if the reachability information indicates that the first terminal is unreachable in the first serving network but is reachable in the second serving network, the first network function determines the third network function (such as AMF 131) as the fourth network function.

In an embodiment, in step S220, if the reachability information indicates that the reachability of the first terminal is the same in both the first serving network and the second serving network, the network function with the latest registration time of the first terminal between the second network function of the first serving network and the third network function of the second serving network may be determined as the fourth network function. It can be understood that when the first terminal has the same reachability (either both reachable or both unreachable) in the first serving network and the second serving network, the network in which the first terminal has a later registration time or the registration time is closest to the current time point may be determined based on the registration time information of the first terminal in the first serving network and that in the second serving network. In this case, the network function in the serving network with the later registration time or the registration time closest to the current time is selected as the fourth network function. For example, if the reachability information indicates that the first terminal has the same reachability in the first serving network and the second serving network, the second network function may be selected as the fourth network function if the registration time of the first terminal in the first serving network is later than that in the second serving network. Alternatively, the third network function may be selected as the fourth network function if the registration time of the first terminal in the first serving network is earlier than that in the second serving network.

In an embodiment, in step S220, if the connection status information indicates that the connection status of the first terminal is the same in both the first serving network and the second serving network, the network function with the latest registration time of the first terminal between the second network function of the first serving network and the third network function of the second serving network may be determined as the fourth network function. It can be understood that when the first terminal has the same connection status (either both in the connected state or both in the idle state) in the first serving network and the second serving network, the network in which the first terminal has a later registration time or the registration time is closest to the current time point may be determined based on the registration time information of the first terminal in the first serving network and that in the second serving network. For example, if the connection status information indicates that the first terminal has the same connection status in the first serving network and the second serving network, the second network function may be selected as the fourth network function if the registration time of the first terminal in the first serving network is later than that in the second serving network. Alternatively, the third network function may be selected as the fourth network function if the registration time of the first terminal in the first serving network is earlier than that in the second serving network.

In an embodiment, the first terminal may access the first serving network through the 3GPP access type and access the second serving network through the non-3GPP access type. In this case, in step S220, if the reachability information indicates that the first terminal has the same reachability in the first serving network and the second serving network, the second network function may be determined as the fourth network function. In other words, when the first terminal has the same reachability in the first serving network and the second serving network, the network function in the serving network accessed by the first terminal through the 3GPP access type, i.e., the second network function, may be selected as the fourth network function.

In an embodiment, the first terminal may access the first serving network through the 3GPP access type and access the second serving network through the non-3GPP access type. In this case, in step S220, if the connection status information indicates that the first terminal has the same connection status in the first serving network and the second serving network, the second network function may be determined as the fourth network function. In other words, when the first terminal has the same connection status in the first serving network and the second serving network, the network function in the serving network accessed by the first terminal accesses through the 3GPP access type, i.e., the second network function, may be selected as the fourth network function.

In an embodiment, the first terminal may access the first serving network through the 3GPP access type and access the second serving network through the non-3GPP access type. In this case, in step 220, the second network function may be determined as the fourth network function by default. In other words, based on the default configuration, the network function in the serving network that the first terminal accesses through the 3GPP access type, i.e., the second network function, may be directly selected as the fourth network function.

In an embodiment, the first terminal may access the first serving network through the 3GPP access type and access the second serving network through the non-3GPP access type. In this case, in step 220, the second network function may be determined as the fourth network function according to the operator policy. In other words, according to the operator policy, the network function in the serving network that the first terminal accesses through the 3GPP access type, i.e., the second network function, may be selected as the fourth network function.

It should be noted that the above are only exemplary descriptions of using the first data, default configuration, and operator policy respectively to determine the fourth network function in step S220, and the embodiments of the present disclosure are not specifically limited thereto.

At this point, through the above steps S210 and S220, the first network function determines the fourth network function used to trigger the authentication procedure for the first terminal.

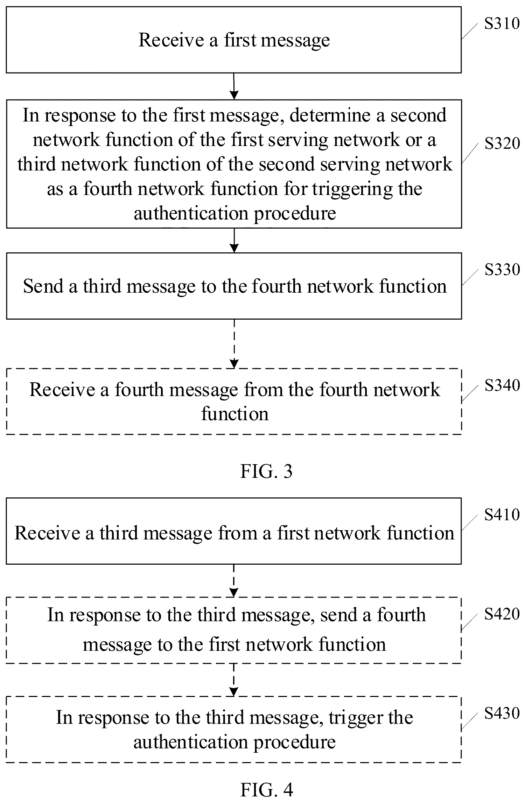

In an embodiment, FIG. 3 is a schematic flow chart of another embodiment of an authentication method according to an embodiment of the present disclosure. The authentication method in this embodiment is also applied to the first network function. As shown in FIG. 3, the authentication method may include at least steps S310 to S330.

Here, steps S310 and S320 may be the same as steps S210 and S220 in the embodiment shown in FIG. 2. For the sake of brevity, steps S310 and S320 are not described in detail herein.

In step S330, a third message is sent to the fourth network function.

It can be understood that after the first network function determines the fourth network function used to trigger the authentication procedure for the first terminal through steps S310 and S320, it may send a third message to the fourth network function. Here, the third message is used to instruct the fourth network function to trigger the authentication procedure for the first terminal. In an embodiment, the third message may be a request message or a notification message. For example, the third message may be a re-authentication request message. For another example, the third message may be a re-authentication notification message.

It can be understood that after receiving the third message, the fourth network function may reply with a message to the first network function, or may not reply with a message to the first network function.

In an embodiment, the authentication method may further include step S340.

In step S340, a fourth message is received from the fourth network function.

Here, the fourth message is a message that the fourth network function replies to the first network function in response to the third message.

In an embodiment, in the case that the third message is a request message, the fourth message may be a response message. In an embodiment, in the case that the third message is a notification message, the fourth message may be a notification confirmation message.

At this point, through the above steps S310 to S330 or through steps S310 to S340, the first network function can instruct the fourth network function in the first serving network or the second serving network to trigger the authentication procedure for the first terminal.

FIG. 4 is a schematic flow chart of an embodiment of another authentication method according to an embodiment of the present disclosure. The authentication method according to this embodiment is applied to a fourth network function. As shown in FIG. 4, the authentication method may include step S410.

In step S410, a third message is received from a first network function.

Here, the third message is used to instruct the fourth network function to trigger an authentication procedure for a first terminal. The third message may be a request message or a notification message. For example, the third message may be a re-authentication request message. For another example, the third message may be a re-authentication notification message.

It can be understood that the fourth network function is located in the first serving network or the second serving network. The first terminal accesses the first serving network and the second serving network respectively through different access types. The fourth network function is the one selected by the first network function from the second network function of the first serving network and the third network function of the second serving network via the authentication methods shown in FIG. 2 and FIG. 3.

In an embodiment, the first network function may be a UDM. In an embodiment, the second network function may be an AMF. It can be understood that the first network function and the second network function may also be other network functions, which is not specifically limited by the embodiments of the present disclosure.

In an embodiment, the authentication method may further include step S420.

In step S420, in response to the third message, a fourth message is sent to the first network function.

In an embodiment, in the case that the third message is a request message, the fourth message may be a response message. In an embodiment, in the case that the third message is a notification message, the fourth message may be a notification confirmation message.

It can be understood that step S420 is not necessary. That is to say, after receiving the third message, the fourth network function may reply the fourth message to the first network function, or may not reply the fourth message to the first network function.

In an embodiment, the authentication method may further include step S430.

In step S430, in response to the third message, the authentication procedure is triggered.

Specifically, after receiving the third message, the fourth network function may confirm, based on the third message, that it is the network function used to trigger the authentication procedure for the first terminal. In this way, the fourth network function may trigger the authentication procedure.

Here, the authentication procedure may be a primary authentication procedure as defined in Sections 6.1.2 and 6.1.3 of the standard document 3GPP TS 33.501.

To facilitate understanding of the technical solutions in the embodiments of the present disclosure, the authentication method in the embodiments of the present disclosure is described below with reference to an exemplary embodiment. In the following exemplary embodiment, the first terminal may be a UE, the first network function may be a UDM, the second network function may be an AMF (i.e., AMF1) in a first serving network accessed by the first terminal via a 3GPP access mode, and the third network function may be an AMF (i.e., AMF2) in a second serving network accessed by the first terminal via a non-3GPP access mode. In this exemplary description, SEAF is integrated into the AMF. Of course, the first terminal may be other types of terminal devices, and the first network function, the second network function, and the third network function may be other network functions, which are not specifically limited by the embodiments of the present disclosure.

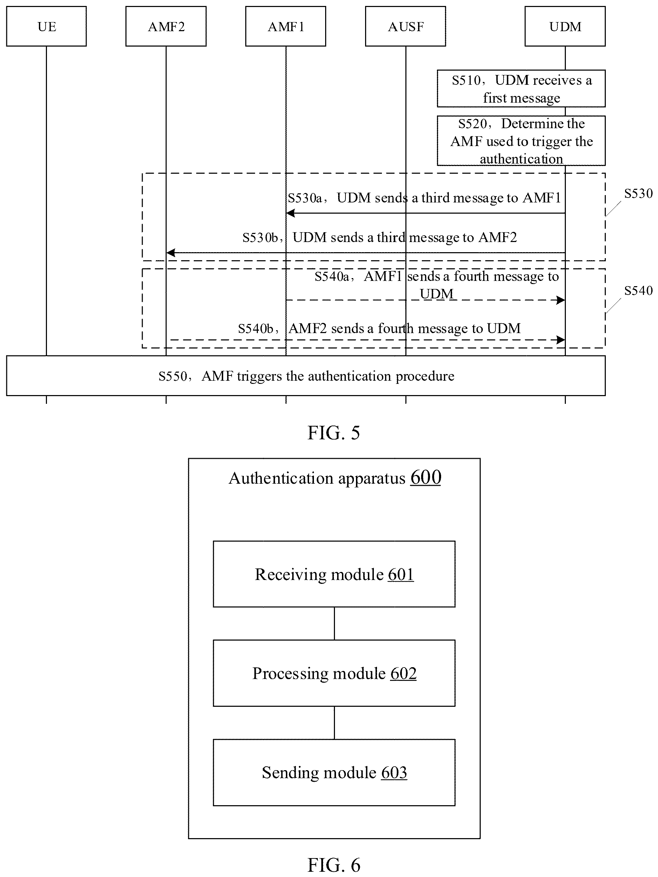

FIG. 5 is a schematic interaction diagram of an exemplary embodiment of an authentication method according to an embodiment of the present disclosure. As shown in FIG. 5, the authentication method may include steps S510 to S550.

In step S510, the UDM receives a first message.

Here, the UDM may receive the first message from different network functions. In an embodiment, the UDM may receive a Nausf_SoRProtection response message. The Nausf_SoRProtection response message may include COUNTER_WRAP or other indication information, which is used to indicate that the counter associated with the UE's KAUSF (CounterSoR) is about to wrap around, and a re-authentication procedure needs to be triggered. In an embodiment, the UDM may receive a Nasuf_UPUProtection response message. The Nasuf_UPUProtection response message may include COUNTER_WRAP or other indication information, which is used to indicate that the counter associated with the UE's KAUSF (CounterUPU) is about to wrap around, and a re-authentication procedure needs to be triggered. In an embodiment, the UDM may receive a Nudm_reauthentication request message. In an embodiment, the UDM may receive a re-authentication message from the AANF.

In step S520, UDM determines the AMF used to trigger the authentication.

After receiving the first message, the UDM shall initiate an authentication procedure to refresh the K_{AUSF}. To this end, the UDM needs to confirm that one of AMF1 and AMF2 is used as the AMF (i.e., the fourth network function) for triggering the authentication procedure of the UE. It can be understood that since the UE accesses the first serving network and the second serving network through different access types, the process of determining the AMF is equivalent to determining one access type from multiple access types.

The UDM may locally store at least one of the following data: UE registration information, UE connection status information, default configuration, and operator policy. In some cases, at least a portion of the registration information, connection status information, default configuration, and operator policy may also be stored in a unified data repository (UDR), and the UDM may obtain such data from the UDR. Based on the stored data, the UDM may determine the AMF used to trigger authentication.

In an embodiment, if the UE is reachable or in a connected state under one access type, and is unreachable/unknown or in an idle state under the other access type, the UDM may select the AMF of the serving network accessed via the former access type and determine to trigger the authentication procedure through this AMF. For example, if the UE is reachable or in a connected state in the first serving network accessed via the 3GPP access type, and is unreachable/unknown or in an idle state in the second serving network accessed via the non-3GPP access type, the UDM may select AMF1. For another example, if the UE is unreachable/unknown or in an idle state in the first serving network accessed via the 3GPP access type, and is reachable or in a connected state in the second serving network accessed via the non-3GPP access type, the UDM may select AMF2.

In an embodiment, if the UE is reachable or in a connected state under both the 3GPP access type and the non-3GPP access type, the UDM may select the AMF of the serving network of the access type with the latest registration time or select AMF1 by default, and determine to trigger the authentication procedure through the AMF (AMF1).

In an embodiment, if the UE is unreachable/unknown or in idle state under both 3GPP access type and non-3GPP access type, the UDM may select the AMF of the serving network of the access type with the latest registration time or select AMF1 by default, and determine to trigger the authentication procedure through the AMF (AMF1).

In an embodiment, the UDM may select AMF 1 by default.

In an embodiment, the UDM may select AMF 1 based on operator policy.

In step S530, the UDM sends a third message to the AMF.

Here, after the UDM determines the AMF, a third message may be sent to the determined AMF.

In an embodiment, the determined AMF may be AMF1. In this case, step S530 may include step S530a. In step S530a, the UDM sends a third message to AMF 1. For example, the UDM may send a re-authentication notification message to AMF1. For another example, the UDM may send a re-authentication request message to AMF1.

In an embodiment, the determined AMF may be AMF2. In this case, step S530 may include step S530b. In step S530b, the UDM sends a third message to AMF2. For example, the UDM may send a re-authentication notification message to AMF2. For another example, the UDM may send a re-authentication request message to AMF2.

It can be understood that since the UDM selects one from AMF1 and AMF2 to trigger the authentication procedure, step S530a and step S530b are executed alternatively.

In step S540, the AMF sends a fourth message to the UDM.

In this step, the AMF may send a fourth message to the UDM as a reply to the third message. In this way, the UDM can know that the AMF is about to trigger the authentication procedure for the UE.

In an embodiment, the determined AMF may be AMF1. In this case, step S540 may include step S540a. In step S540a, AMF1 sends a fourth message to the UDM. For example, AMF1 may send a re-authentication notification confirmation message to the UDM. For another example, AMF1 may send a re-authentication response message to the UDM.

In an embodiment, the determined AMF may be AMF2. In this case, step S540 may include step S540b. In step S540b, AMF2 sends a fourth message to the UDM. For example, AMF2 may send a re-authentication notification confirmation message to the UDM. For another example, AMF2 may send a re-authentication response message to the UDM.

It should be noted that step S540 is optional. That is, after receiving the third message, the AMF may send the fourth message to the UDM, or may not send the fourth message.

In step S550, the AMF triggers the authentication procedure for UE.

After receiving the third message in step S530, or after sending the fourth message in step S540, AMF1 or AMF2 may trigger the authentication procedure. Herein, the authentication procedure may be the primary authentication procedure as defined in Sections 6.1.2 and 6.1.3 of the standard document 3GPP TS 33.501.

In practical applications, after the authentication procedure is completed, the UDM may execute the corresponding process based on the reason that causes the UDM to trigger the authentication procedure. Such processes may include, for example, a steering of roaming process or a user parameter update process.

In the embodiments of the present disclosure, in the present disclosure, for a scenario where a terminal accesses multiple serving networks via different access types, a first network function can determine the second network function of the first serving network or the third network function of the second serving network as the fourth network function for triggering the authentication procedure for the terminal. In this way, an access type can be selected and the corresponding fourth network function for triggering the authentication procedure can be determined; subsequently, the network path for the authentication procedure can be determined. As such, there is no need to suspend services such as steering of roaming and user parameter update, which enhances network security and ensures quality of service.

Based on the same inventive concept, an embodiment of the present disclosure further provides an authentication apparatus. FIG. 6 is a schematic structural diagram of an authentication apparatus according to an embodiment of the present disclosure. As shown in FIG. 6, the aforementioned authentication apparatus 600 includes at least one of the following: a receiving module 601, a processing module 602, and a sending module 603.

In an embodiment, the authentication apparatus may be the first network function in the aforementioned communication system, a chip or system-on-chip within the first network function, or a functional module within the first network function that is used to implement the authentication methods described in the various embodiments above. The authentication apparatus can implement the functions performed by the first network function in the various embodiments above, and these functions may be realized by hardware executing corresponding software. The hardware or software includes one or more modules corresponding to the aforementioned functions.

In this embodiment, the receiving module 601 may be configured to receive a first message. The first message is used to trigger an authentication procedure for a first terminal. The first terminal is a terminal that accesses a first serving network and a second serving network through different access types. The processing module 602 may be configured to, in response to the first message, determine a second network function of the first serving network or a third network function of the second serving network as a fourth network function for triggering the authentication procedure.

In some possible implementation manners, the processing module 602 may be configured to: in response to the first message, determine the second network function or the third network function as the fourth network function based on first data and/or a default configuration and/or an operator policy. The first data includes registration information and/or connection status information of the first terminal in the first serving network and the second serving network.

In some possible implementation manners, the registration information may include registration time information and reachability information.

In some possible implementation manners, the processing module 602 may be configured to: in a case that the reachability information indicates that the first terminal is reachable in the first serving network and is unreachable in the second serving network, determine the second network function as the fourth network function.

In some possible implementation manners, the processing module 602 may be configured to: in a case that the connection status information indicates that the first terminal is in a connected state in the first serving network and in an idle state in the second serving network, determine the second network function as the fourth network function.

In some possible implementation manners, the processing module 602 may be configured to: in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determine a network function of a serving network with a latest registration time of the first terminal, between the second network function of the first serving network and the third network function of the second serving network, as the fourth network function.

In some possible implementation manners, the first terminal may access the first serving network via a 3GPP access type and access the second serving network via a non-3GPP access type. The processing module 602 may be configured to: in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determine the second network function as the fourth network function.

In some possible implementation manners, the first terminal may access the first serving network via a 3GPP access type and access the second serving network via a non-3GPP access type. The processing module 602 may be configured to: determine the second network function as the fourth network function by default.

In some possible implementation manners, the first terminal may access the first serving network via a 3GPP access type and access the second serving network via a non-3GPP access type. The processing module 602 may be configured to: determine the second network function as the fourth network function according to the operator policy.

In some possible implementation manners, the receiving module 601 may be further configured to receive a second message from the second network function and/or the third network function. The second message includes at least one of the following: the registration information and/or the connection status information of the first terminal in the first serving network, and the registration information and/or the connection status information of the first terminal in the second serving network. The processing module 602 may be further configured to store the received registration information and/or connection status information.

In some possible implementation manners, the sending module 603 may be configured to: send a third message to the fourth network function. The third message is used to instruct the fourth network function to trigger the authentication procedure for the first terminal.

In some possible implementation manners, the receiving module 601 may be further configured to: receive a fourth message from a fourth network function. The fourth message is a response message or a confirmation message sent by the fourth network in response to the third message.

In an embodiment, the authentication apparatus may be the fourth network function in the aforementioned communication system, a chip or system-on-chip within the fourth network function, or a functional module within the fourth network function that is used to implement the authentication methods described in the various embodiments above. The authentication apparatus can implement the functions performed by the fourth network function in the various embodiments above, and these functions may be realized by hardware executing corresponding software. The hardware or software includes one or more modules corresponding to the aforementioned functions.

In this embodiment, the receiving module 601 may be configured to receive a third message from a first network function. The third message is used to instruct the fourth network function to trigger an authentication procedure for a first terminal. The first terminal is a terminal that accesses a first serving network and a second serving network through different access types. The fourth network function is determined by the first network function from a second network function and a third network function. The second network function is a network function of the first serving network. The third network function is a network function of the second serving network.

In some possible implementation manners, the sending module 603 may be configured to: send a fourth message to the first network function. The fourth message is a response message or a confirmation message sent by the fourth network in response to the third message.

In some possible implementation manners, the processing module 602 may be configured to trigger the authentication procedure for the first terminal.

It should be noted that for the specific implementation of the authentication apparatus 600, reference may be made to the detailed descriptions of the embodiments in FIGS. 2 to 4; for the sake of conciseness of the specification, details are not repeated herein.

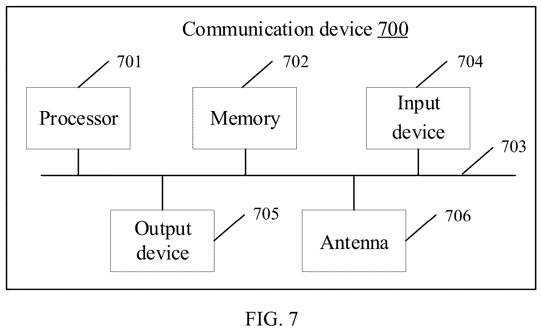

Based on the same inventive concept, an embodiment of the present disclosure provides a communication device. The communication device may be the terminal or network function described in one or more of the above embodiments. FIG. 7 is a schematic structural diagram of a communication device according to an embodiment of the present disclosure. As shown in FIG. 7, the communication device 700 adopts general-purpose computer hardware, which includes a processor 701, a memory 702, a bus 703, an input device 704, and an output device 705.

In some possible implementations, the memory 702 may include computer storage media in the form of volatile and/or non-volatile memory, such as read-only memory and/or random access memory. The memory 702 may store an operating system, application programs, other program modules, executable code, program data, user data, etc.

The input device 704 may be used to input commands and information into the communication device 700. Examples of the input device 704 include a keyboard or pointing devices such as a mouse, trackball, touchpad, microphone, joystick, gamepad, satellite TV antenna, scanner, or similar devices. These input devices may be connected to the processor 701 via the bus 703.

The output device 705 may be used for the communication device 700 to output information. In addition to a monitor, the output device 705 may also be other peripheral output devices, such as speakers and/or printing devices, and these output devices 705 may also be connected to the processor 701 via the bus 703.

The communication device 700 may be connected to a network via an antenna 706, for example, to a local area network (LAN). In a networked environment, the computer-executable instructions stored in the control device may be stored in a remote storage device, rather than being limited to local storage.

When the processor 701 in the communication device 700 executes the executable codes or application stored in the memory 702, the communication device 700 executes the communication method on the terminal side or the network function side in the above embodiments. For the specific execution process, reference is made to the above embodiments, which will not be repeated here.

The memory 702 may store computer-executable instructions for implementing the functions of the receiving module 601, the processing module 602, and the sending module 603 in FIG. 6. The functions/implementations of the receiving module 601, the processing module 602, and the sending module 603 in FIG. 6 may all be implemented by the processor 701 in FIG. 7 calling the computer-executable instructions stored in the memory 702. For specific implementation processes and functions, reference is made to the relevant embodiments above.

Based on the same inventive concept, an embodiment of the present disclosure provides a terminal device, which is consistent with the terminal (or referred to as the first terminal) in one or more of the above embodiments.

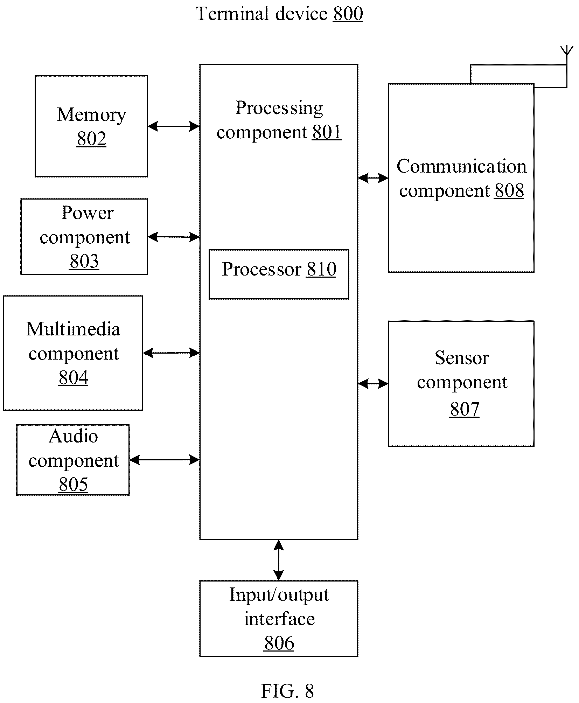

Referring to FIG. 8, the terminal 800 may include one or more of the following components: a processing component 801, a memory 802, a power component 803, a multimedia component 804, an audio component 805, an input/output (I/O) interface 806, a sensor component 807, and a communication component 808.

The processing component 801 typically controls overall operations of the terminal 800, such as the operations associated with display, telephone calls, data communications, camera operations, and recording operations. The processing component 801 may include one or more processors 810 to execute instructions to complete all or part of the steps in the above-described methods. Moreover, the processing component 801 may include one or more modules which facilitate the interaction between the processing component 801 and other components. For instance, the processing component 801 may include a multimedia module to facilitate the interaction between the multimedia component 804 and the processing component 801.

The memory 802 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 803 provides power to various components of the terminal 800. The power component 803 may include a power management system, one or more power sources, and any other components associated with the generation, management, and distribution of power in the terminal 800.

The multimedia component 804 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 804 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 805 is configured to output and/or input audio signals. For example, the audio component 805 includes a microphone ("MIC") configured to receive an external audio signal when the terminal 800 is in an operation mode, such as a call mode, a recording mode, and a voice recognition mode. The received audio signal may be further stored in the memory 802 or transmitted via the communication component 808. In some embodiments, the audio component 805 further includes a speaker to output audio signals.

The I/O interface 806 provides an interface between the processing component 801 and peripheral interface modules, such as a keyboard, a click wheel, buttons, and the like. The buttons may include, but are not limited to, a home button, a volume button, a starting button, and a locking button.

The sensor component 807 includes one or more sensors to provide status assessments of various aspects of the terminal 800. For instance, the sensor component 807 may detect an open/closed status of the device 800, relative positioning of components, e.g., the display and the keypad, of the terminal 800, a change in location of the terminal 800 or a component of the terminal 800, a presence or absence of user contact with the terminal 800, an orientation or an acceleration/deceleration of the terminal 800, and a change in temperature of the terminal 800. The sensor component 807 may include a proximity sensor configured to detect the presence of nearby objects without any physical contact. The sensor component 807 may also include a light sensor, such as a CMOS or CCD image sensor, for use in imaging applications. In some embodiments, the sensor component 807 may also include an accelerometer sensor, a gyroscope sensor, a magnetic sensor, a pressure sensor, or a temperature sensor.

The communication component 808 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 808 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

Based on the same inventive concept, an embodiment of the present disclosure provides a network device, which is consistent with the network function in one or more of the above embodiments.

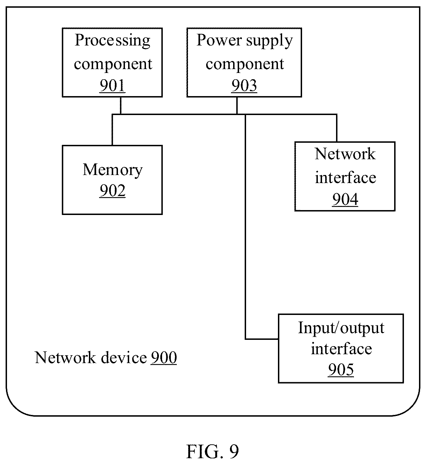

FIG. 9 is a schematic structural diagram of a network device according to an embodiment of the present disclosure. The network device may be, for example, an access network device. As shown in FIG. 9, the network device 900 may include a processing component 901, which further includes one or more processors, and a memory resource represented by a memory 902 for storing instructions executable by the processing component 901, such as an application program. The application stored in the memory 902 may include one or more modules, each corresponding to a set of instructions. In addition, the processing component 901 is configured to execute instructions to perform the aforementioned authentication method applied to the first network function side or the fourth network function side.

The network device 900 may further include a power supply component 903 configured to perform power management of the network device 900, a wired or wireless network interface 904 configured to connect the network device 900 to a network, and an input/output (I/O) interface 905. The network device 900 may operate based on an operating system stored in the memory 902, such as Windows Server^{™}, Mac OS X^{™}, Unix^{™}, Linux^{™}, FreeBSD^{™} or the like.

Based on the same inventive concept, an embodiment of the present disclosure further provides a computer storage medium having computer-executable instructions stored thereon. The instructions, when executed on a computer, are configured to execute the authentication method on the first network function side or the fourth network function side in one or more of the above embodiments.

Based on the same inventive concept, an embodiment of the present disclosure further provides a computer program or a computer program product. When the computer program product is executed on a computer, it enables the computer to implement the authentication method on the first network function side or the fourth network function side in one or more of the above embodiments.

Other embodiments of the present disclosure will be apparent to those skilled in the art from consideration of the specification and practice of the contents disclosed here. The present disclosure is intended to cover any variations, uses, or adaptations of the present disclosure, which follows the general principles thereof and includes the common knowledge or habitual technical means in this technical field that is not disclosed in the present disclosure. The specification and embodiments are considered as exemplary only, with a true scope and spirit of the present disclosure being indicated by the following claims.

It will be appreciated that the present disclosure is not limited to the exact construction that has been described above and illustrated in the accompanying drawings, and various modifications and changes can be made without departing from the scope thereof. The scope of the present disclosure is only limited by the appended claims.

## Claims

1. An authentication method, applied to a first network function, comprising:
receiving a first message, wherein the first message is used to trigger an authentication procedure for a first terminal, wherein the first terminal is a terminal that accesses a first serving network and a second serving network respectively through different access types; and
determining a second network function or a third network function as a fourth network function for triggering the authentication procedure, wherein the second network function is a network function of the first serving network, and the third network function is a network function of the second serving network.

2. The method according to claim 1, wherein determining the second network function or the third network function as the fourth network function for triggering the authentication procedure comprises:
determining the second network function or the third network function as the fourth network function based on first data and/or a default configuration and/or an operator policy;
wherein the first data comprises registration information and/or connection status information of the first terminal in the first serving network, and registration information and/or connection status information of the first terminal in the second serving network.

3. The method according to claim 2, wherein the registration information comprises registration time information and reachability information.

4. The method according to claim 3, wherein determining the second network function or the third network function as the fourth network function based on the first data and/or the default configuration and/or the operator policy comprises:
in a case that the reachability information indicates that the first terminal is reachable in the first serving network and is unreachable in the second serving network, determining the second network function as the fourth network function.

5. The method according to claim 3, wherein determining the second network function or the third network function as the fourth network function based on the first data and/or the default configuration and/or the operator policy comprises:
in a case that the connection status information indicates that the first terminal is in a connected state in the first serving network and in an idle state in the second serving network, determining the second network function as the fourth network function.

6. The method according to claim 3, wherein determining the second network function or the third network function as the fourth network function based on the first data and/or the default configuration and/or the operator policy comprises:
in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determining a network function of a serving network with a latest registration time of the first terminal, between the second network function of the first serving network and the third network function of the second serving network, as the fourth network function.

7. The method according to claim 3, wherein determining the second network function or the third network function as the fourth network function based on the first data and/or the default configuration and/or the operator policy comprises:
in a case that the reachability information indicates that a reachability of the first terminal in the first serving network and a reachability of the first terminal in the second serving network are the same, or in a case that the connection status information indicates that a connection status of the first terminal in the first serving network and a connection status of the first terminal in the second serving network are the same, determining the second network function as the fourth network function;
wherein the first terminal accesses the first serving network through a 3GPP access type and accesses the second serving network through a non-3GPP access type.

8. The method according to claim 3, wherein determining the second network function or the third network function as the fourth network function based on the first data and/or the default configuration and/or the operator policy comprises:
determining the second network function as the fourth network function by default;
wherein the first terminal accesses the first serving network through a 3GPP access type and accesses the second serving network through a non-3GPP access type.

9. The method according to claim 3, wherein determining the second network function or the third network function as the fourth network function based on the first data and/or the default configuration and/or the operator policy comprises:
determining the second network function as the fourth network function according to the operator policy;
wherein the first terminal accesses the first serving network through a 3GPP access type and accesses the second serving network through a non-3GPP access type.

10. The method according to any one of claims 2 to 9, wherein before determining the second network function or the third network function as the fourth network function for triggering the authentication procedure, the method further comprises:
receiving a second message from the second network function and/or the third network function, wherein the second message includes at least one of: the registration information and/or the connection status information of the first terminal in the first serving network, and the registration information and/or the connection status information of the first terminal in the second serving network; and
storing the received registration information and/or connection status information.

11. The method according to any one of claims 1 to 10, wherein after determining the second network function or the third network function as the fourth network function for triggering the authentication procedure, the method further comprises:
sending a third message to the fourth network function, wherein the third message is used to instruct the fourth network function to trigger the authentication procedure for the first terminal.

12. The method according to claim 11, further comprising:
receiving a fourth message from the fourth network function, wherein the fourth message is a response message or a confirmation message sent by the fourth network in response to the third message.

13. An authentication method, applied to a fourth network function, comprising:
receiving a third message from a first network function, wherein the third message is used to instruct the fourth network function to trigger an authentication procedure for a first terminal, wherein the first terminal is a terminal that accesses a first serving network and a second serving network respectively through different access types;
wherein the fourth network function is determined by the first network function from a second network function and a third network function, the second network function is a network function of the first serving network, and the third network function is a network function of the second serving network.

14. The method according to claim 13, further comprising:
sending a fourth message to the first network function, wherein the fourth message is a response message or a confirmation message sent by the fourth network in response to the third message.

15. The method according to claim 13 or 14, wherein after receiving the third message from the first network function, the method further comprises:
triggering the authentication procedure for the first terminal.

16. An authentication apparatus, provided in a first network function, comprising:
a receiving module, configured to receive a first message, wherein the first message is used to trigger an authentication procedure for a first terminal, wherein the first terminal is a terminal that accesses a first serving network and a second serving network respectively through different access types; and
a processing module, configured to determine a second network function or a third network function as a fourth network function for triggering the authentication procedure, wherein the second network function is a network function of the first serving network, and the third network function is a network function of the second serving network.

17. An authentication apparatus, provided in a fourth network function, comprising:
a receiving module, configured to receive a third message from a first network function, wherein the third message is used to instruct the fourth network function to trigger an authentication procedure for a first terminal, wherein the first terminal is a terminal that accesses a first serving network and a second serving network respectively through different access types;
wherein the fourth network function is determined by the first network function from a second network function and a third network function, the second network function is a network function of the first serving network, and the third network function is a network function of the second serving network.

18. A network device, comprising:
a memory, configured to store computer-executable instructions; and
a processor, connected to the memory;
wherein the processor is configured to execute the computer-executable instructions stored on the memory to implement the authentication method according to any one of claims 1 to 12.

19. A network device, comprising:
a memory, configured to store computer-executable instructions; and
a processor, connected to the memory;
wherein the processor is configured to execute the computer executable instructions stored on the memory to implement the authentication method according to any one of claims 13 to 15.

20. A computer storage medium, wherein the computer storage medium stores computer-executable instructions, wherein the computer-executable instructions, when executed by a processor, are capable of implementing the authentication method according to any one of claims 1 to 15.
